# EUROPEAN PATENT SPECIFICATION

(11) **EP 3 159 453 B1**
(45) Date of publication and mention of the grant of the patent: **14.02.2018**
(21) Application number: 15190829.0
(22) Date of filing: 21.10.2015
(51) Int. Cl.: E02F 9/08, F01P 3/20, B60H 1/00

(54) **WORKING VEHICLE**
ARBEITSFAHRZEUG
VÉHICULE DE TRAVAIL

(43) Date of publication of application: 26.04.2017
(73) Proprietor: Komatsu Ltd., Minato-ku Tokyo 107-8414 (JP)
(72) Inventor: TAKAMI, Yukio, Komatsu-shi, Ishikawa 923-0392 (JP)
(74) Representative: Global IP Europe Patentanwaltskanzlei

(56) References cited:
- EP-A1- 2 226 478
- EP-A2- 0 734 892
- DE-T5-112014 000 025
- JP-A- 2011 241 722
- US-A1- 2012 125 593

## Description

### TECHNICAL FIELD

Disclosed is a work vehicle that includes a heat exchange medium circulation circuit for performing cooling and heating of in-vehicle equipment.

### BACKGROUND ART

JP 2011 - 241722 A discloses a vehicle equipped with a circuit that circulates a heat exchange medium such as cooling water or the like (i.e. a heat exchange medium circulation circuit). Specifically, it discloses a reducing agent injection device cooling circuit and a reducing agent tank antifreezing circuit that are provided in parallel to communicate with an engine cooling circuit.

EP 2 226 478 A1 discloses a work vehicle, comprising: an engine; an exhaust treatment device configured to treat the exhaust of the engine; a reducing agent injection device configured to inject a reducing agent into the exhaust treatment device; a reducing agent tank for storing the reducing agent; an operator compartment; an engine cooling circuit; a reducing agent injection device cooling circuit; and a reducing agent tank antifreezing circuit.

### SUMMARY OF INVENTION

### TECHNICAL PROBLEM

Apart from the circuits described above, a work vehicle is also equipped with a heating circuit for heating the operator compartment. If such a heating circuit is provided separately from the circuits described above and in parallel therewith, then, due to increase in the required amount of heat exchange medium (i.e. cooling water), it is difficult to ensure sufficient heating performance of the heating circuit, sufficient cooling performance of the reducing agent injection device cooling circuit, and sufficient antifreezing performance of the reducing agent tank antifreezing circuit.

This specification discloses a work vehicle that can ensure the heating performance of a heating circuit, the cooling performance of a reducing agent injection device cooling circuit, and the antifreezing performance of a reducing agent tank antifreezing circuit.

### SOLUTION TO TECHNICAL PROBLEM

A work vehicle according to a first aspect of the present invention includes an engine, an exhaust treatment device configured to treat the exhaust of the engine, a reducing agent injection device configured to inject a reducing agent into the exhaust treatment device, a reducing agent tank for storing the reducing agent, an operator compartment, an engine cooling circuit, a reducing agent injection device cooling circuit, a reducing agent tank antifreezing circuit, and a heating circuit for the operator compartment. The reducing agent injection device cooling circuit, the reducing agent tank antifreezing circuit, and the heating circuit are arranged so as to communicate with the engine cooling circuit. And one of the reducing agent injection device cooling circuit, the reducing agent tank antifreezing circuit, and the heating circuit is arranged in series with the other circuits.

With the configuration above, the required amount of heat exchange medium that is required is reduced, as compared with the case in which the reducing agent injection device cooling circuit, the reducing agent tank antifreezing circuit, and the heating circuit are all arranged in parallel. Accordingly, it is possible to ensure sufficient heating performance for the heating circuit, to ensure sufficient cooling performance for the reducing agent injection device cooling circuit, and to ensure sufficient antifreezing performance for the reducing agent tank antifreezing circuit.

According to a preferred embodiment of the work vehicle mentioned above, the reducing agent tank antifreezing circuit is arranged in parallel with the heating circuit. And the reducing agent injection device cooling circuit is arranged in series with a parallel combination of the reducing agent tank antifreezing circuit and the heating circuit.

With the configuration above, the reducing agent tank antifreezing circuit and the heating circuit abstract heat from the heat exchange medium (i.e. the cooling water), while the reducing agent injection device cooling circuit supplies heat to the heat exchange medium. Accordingly, it becomes possible to implement a heat exchange medium flow path achieving good thermal efficiency.

According to another preferred embodiment of any one of the work vehicles mentioned above, the reducing agent tank antifreezing circuit includes a throttle provided in the vicinity of the reducing agent tank.

With the configuration above, the diameter of the throttle is set so that appropriate amounts of the heat exchange medium are supplied to the heating device and to the heat exchanger. Due to this, while still ensuring good heating performance for the heating device, it becomes possible to set the temperature of the reducing agent within an appropriate temperature range, so that it is possible to prevent freezing of the reducing agent.

According to further another preferred embodiment of any one of the work vehicles mentioned above, the work vehicle further includes a bypass circuit arranged in parallel with the reducing agent injection device cooling circuit. The bypass circuit preferably includes a throttle.

With the configuration above, the flow of a large quantity of cooling water into the reducing agent injection device cooling circuit and consequent over-cooling of the reducing agent injection device is prevented. The flow rate of cooling water in the reducing agent injection device cooling circuit is preferably adjusted according to the diameter of the throttle. Accordingly, it becomes possible to keep the temperature of the reducing agent in the reducing agent injection device within an appropriate temperature range.

According to further another preferred embodiment of any one of the work vehicles mentioned above, the reducing agent injection device cooling circuit is arranged nearer to the engine cooling circuit than the parallel combination of the reducing agent tank antifreezing circuit and the heating circuit.

With the configuration above, the heat exchange medium (i.e. the cooling water) that has been heated up by the engine cooling circuit and the reducing agent injection device cooling circuit is supplied to the reducing agent tank antifreezing circuit and to the heating circuit. Accordingly, the heating performance for the operator compartment and the antifreezing performance for the reducing agent tank are enhanced.

According to further another preferred embodiment of any one of the work vehicles mentioned above, the reducing agent injection device cooling circuit is linked to the engine cooling circuit at the cylinder block of the engine.

With the configuration above, cooling water to which a great deal of heat has not been applied by the engine cooling circuit is supplied to the reducing agent injection device cooling circuit. Accordingly, the cooling performance of the reducing agent injection device is enhanced.

### ADVANTAGEOUS EFFECTS OF INVENTION

In the work vehicle according to the first aspect of the present invention described above one of the reducing agent injection device cooling circuit, the reducing agent tank antifreezing circuit, and the heating circuit is arranged in series with the other circuits. Accordingly, the amount of heat exchange medium that is required is smaller, as compared with the case in which the reducing agent injection device cooling circuit, the reducing agent tank antifreezing circuit, and the heating circuit are provided all in parallel. Therefore it is possible to ensure the heating performance of the heating circuit, the cooling performance of the reducing agent injection device cooling circuit, and the antifreezing performance of the reducing agent tank antifreezing circuit.

### BRIEF DESCRIPTION OF DRAWINGS

Fig. 1 is a side view of a work vehicle according to an embodiment;
Fig. 2 is a side view showing structures in the interior of an engine compartment;
Fig. 3 is a functional diagram schematically showing a heat exchange medium flow path in a work vehicle according to a first implementation example; and
Fig. 4 is a functional diagram schematically showing a heat exchange medium flow path in a work vehicle according to a second implementation example.

### PREFERRED EMBODIMENTS OF THE INVENTION

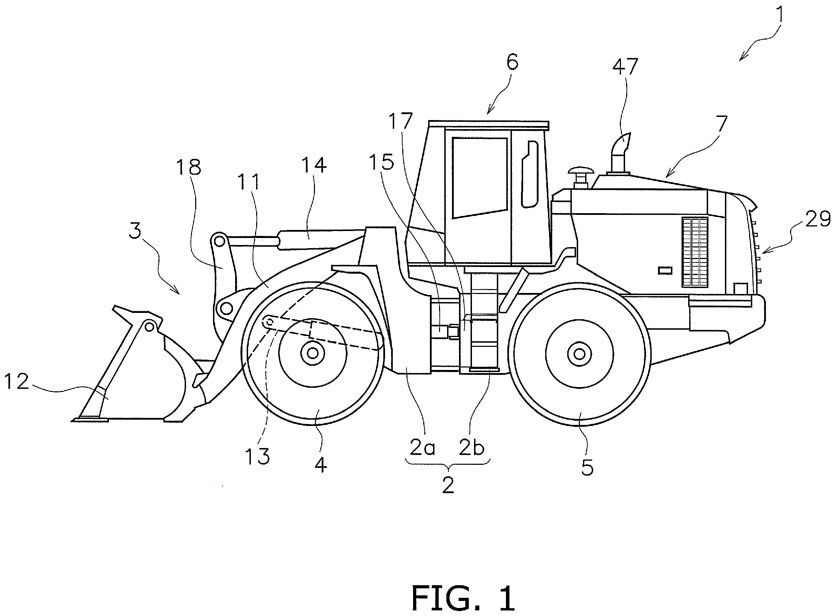

A work vehicle according to an embodiment will now be explained in the following with reference to the appended drawings. Fig. 1 is a side view of a work vehicle 1 according to this embodiment. The work vehicle 1 of this embodiment is a wheel loader. As shown in Fig. 1, the work vehicle 1 comprises a vehicle body frame 2, a working tool 3, traveling wheels 4 and 5, and an operator compartment 6. The work vehicle 1 travels by the traveling wheels 4 and 5 being rotationally driven. And the work vehicle 1 is able to perform tasks such as excavation and so on by employing the working tool 3.

The working tool 3 is attached to the vehicle body frame 2. The working tool 3 is driven by working hydraulic fluid supplied from a hydraulic fluid pressure pump not shown in the figures. The working tool 3 comprises a boom 11 and a bucket 12. The boom 11 is installed to the vehicle body frame 2. The working tool 3 comprises a lift cylinder 13 and a bucket cylinder 14. The lift cylinder 13 and the bucket cylinder 14 are hydraulic fluid pressure cylinders. One end of the lift cylinder 13 is attached to the vehicle body frame 2. And the other end of the lift cylinder 13 is attached to the boom 11. The boom 11 is pivoted up and down due to the lift cylinder 13 being extended and retracted by working hydraulic fluid from a hydraulic fluid pressure pump. The bucket 13 is attached to the end of the boom 11. One end of the bucket cylinder 14 is attached to the vehicle body frame 2. And the other end of the bucket cylinder 14 is attached to a tilt arm 18. The bucket cylinder 14 drives the bucket 12 via the tilt arm 18 and a tilt rod not shown in the figures. The bucket 12 is pivoted up and down by the bucket cylinder 14 being extended and retracted by working hydraulic fluid from a hydraulic fluid pressure pump.

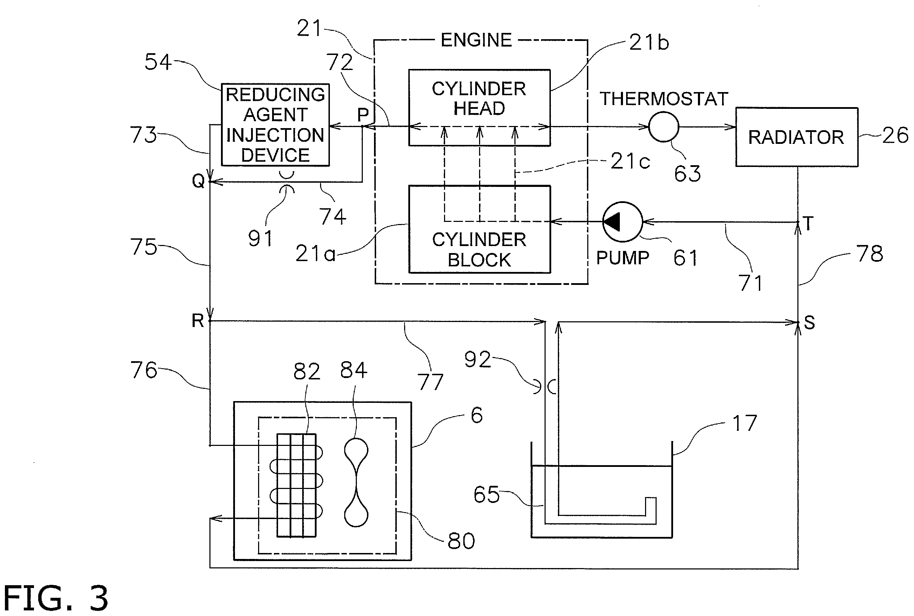

The operator compartment 6 and the traveling wheels 4 and 5 are attached to the vehicle body frame 2. The operator compartment 6 is disposed over the vehicle body frame 2. A seat upon which the operator sits and a heating device 80 that will be described hereinafter (refer to Fig. 3 etc.) and so on are disposed within the operator compartment 6. The vehicle body frame 2 has a front frame 2a and a rear frame 2b. The front frame 2a and the rear frame 2b are attached together so that they can mutually pivot in the leftward and rightward directions. It should be understood that, in this embodiment, it will be supposed that the "forward", "rearward", "leftward", and "rightward" directions mean the forward, rearward, leftward, and rightward directions as seen by an operator in the operator compartment 6.

The working tool 3 is attached to the front frame 2a. And the operator compartment 6, an engine compartment 7, and a reducing agent tank 17 are disposed upon the rear frame 2b. The engine compartment 7 is disposed rearward of the operator compartment 6. The reducing agent tank 17 is disposed at the side of the operator compartment 7 (in the Fig. 1 example, on the left side thereof), and moreover forward of the engine compartment 7. The reducing agent tank 17 is a reservoir for a reducing agent that is injected by a reducing agent injection device 54, as will be described hereinafter.

This work vehicle 1 also comprises a steering cylinder 15. The steering cylinder 15 is attached to the front frame 2a and to the rear frame 2b. The steering cylinder 15 is a hydraulic fluid pressure cylinder. The direction of progression of the work vehicle 1 is changed to left and to right by the steering cylinder 15 extending and retracting.

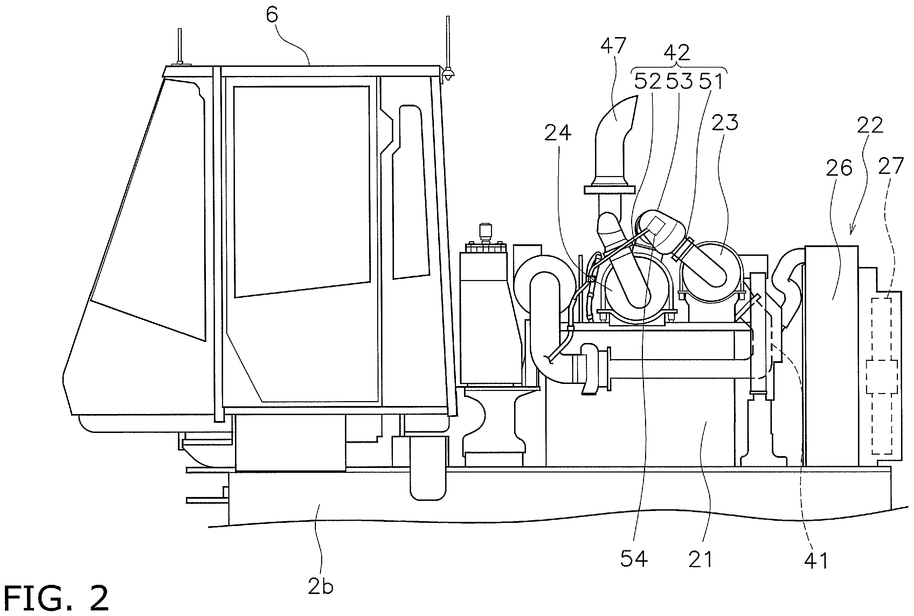

Fig. 2 is a side view showing structures in the interior of the engine compartment 7. As shown in Fig. 2, an engine 21, a cooling device 22, a first exhaust treatment device 23, and a second exhaust treatment device 24 are arranged within the engine compartment 7.

The engine 21 drives the traveling wheels 4 and 5 and the hydraulic fluid pressure pumps described above. The engine 21 is supported upon the rear frame 2b. And the cooling device 22 comprises a radiator 26 and a fan 2. The radiator 26 cools the cooling water of the engine 21. And the fan 27 generates an air flow that flows rearward through the radiator 26. The air that has passed through the radiator 26 is discharged rearward from a venting outlet 29 on the rear surface of the engine compartment 7.

The first exhaust treatment device 23 is disposed above the engine 21. And the first exhaust treatment device 23 treats the exhaust of the engine 21. This first exhaust treatment device 23 may, for example, be a diesel oxidation catalyst (DOC) device. The first exhaust treatment device 23 has an approximately cylindrical shape. The first exhaust treatment device 23 is disposed so that the central axial line of the first exhaust treatment device 23 extends in the widthwise direction of the vehicle. Thus, the first exhaust treatment device 23 is disposed so that the longitudinal direction of the first exhaust treatment device 23 lies along the widthwise direction of the vehicle. The first exhaust treatment device 23 is connected to the engine 21 via a first connection pipe 41.

The second exhaust treatment device 24 is disposed above the engine 21 and forward of the first exhaust treatment device 23. This second exhaust treatment device 24 treats the exhaust of the engine 21. The second exhaust treatment device 24 may, for example, be a selective catalytic reduction (SCR) device. The second exhaust treatment device 24 has an approximately cylindrical shape. The second exhaust treatment device 24 is disposed so that the central axial line of the second exhaust treatment device 24 extends in the widthwise direction of the vehicle. Thus, the second exhaust treatment device 24 is disposed so that the longitudinal direction of the second exhaust treatment device 24 lies along the widthwise direction of the vehicle. The second exhaust treatment device 24 is connected to the first exhaust treatment device 23 via a second connection pipe 42.

The second connection pipe 42 is disposed above both the first exhaust treatment device 23 and the second exhaust treatment device 24. The longitudinal direction of the second connection pipe 42 lies along the widthwise direction of the vehicle. The reducing agent injection device 54 is attached to the second connection pipe 42. The reducing agent injection device 54 injects a reducing agent stored in the reducing agent tank 17 into the second connection pipe 42. This reducing agent may, for example, be aqueous urea. The second connection pipe 42 is an exhaust treatment device that treats the exhaust of the engine 21 by mixing this reducing agent into the exhaust from the engine 21.

An exhaust conduit 47 is connected to the second exhaust treatment device 24. This exhaust conduit 47 is positioned above the second exhaust treatment device 24. The exhaust conduit 47 extends in the widthwise direction of the vehicle over the second exhaust treatment device 24, and is curved upward. As shown in Fig. 1, the end portion of the exhaust conduit 47 projects upward from the upper surface of the engine compartment 7. The end portion of the exhaust conduit 47 is curved rearward.

It should be understood that it would also be acceptable to arrange the first exhaust treatment device 23, the second exhaust treatment device 24, and the second connection pipe 42 in a configuration in which they are not mutually parallel. Moreover, it would also be acceptable for the longitudinal directions of the first exhaust treatment device 23, the second exhaust treatment device 24, and the second connection pipe 42 not to extend in the widthwise direction of the vehicle. For example, their longitudinal directions could extend in the longitudinal direction of the vehicle. Or, alternatively, it would also be acceptable for their longitudinal directions to be angled with respect to the widthwise direction of the vehicle.

It would also be acceptable for the second connection pipe 42 not to be positioned over both the first exhaust treatment device 23 and the second exhaust treatment device 24. For example, it would be acceptable for the central axial lines of the first exhaust treatment device 23, the second exhaust treatment device 24, and the second connection pipe 42 to be arranged in sequence in the horizontal direction, parallel to one another.

Fig. 3 is a functional diagram schematically showing a heat exchange medium flow path in a work vehicle according to a first implementation example. The principal heat exchange medium flow conduits corresponding to this implementation example will now be explained on the basis of Fig. 3. The cooling water of the engine 21 is used as this heat exchange medium. Principally, this work vehicle 1 includes a pump 61, a first conduit 71, a second conduit 72, a reducing agent injection device cooling circuit 73, a bypass circuit 74, a third conduit 75, a heating circuit 76, a reducing agent tank antifreezing circuit 77, and a return conduit 78.

The first conduit 71 links a water jacket of the cylinder block 21a of the engine 21 and the radiator 26, and conducts cooling water that has been cooled by the radiator 26 to the water jacket of the cylinder block 21a. It should be understood that the pump 61 is connected at an intermediate portion of the first conduit 71. The pump 61 is driven by power obtained from the engine 21, and supplies cooling water to the engine 21 via the first conduit 21. The engine 21 includes an engine cooling circuit 21c that comprises the water jacket of the cylinder block 21a and a water jacket of a cylinder head 21b.

A portion of the cooling water that flows into the water jacket of the cylinder head 21b is directed to a thermostat 63. Here, when the temperature of the cooling water from the engine cooling circuit 21c is higher than a predetermined temperature, the thermostat 63 flows the cooling water that has flowed to the thermostat 63 to the radiator 26. And, when the temperature of the cooling water from the engine cooling circuit 21c is less than or equal to than the predetermined temperature, the thermostat 63 intercepts the cooling water flow conduit from the cylinder head 21b to the radiator 26.

Another portion of the cooling water that has flowed into the water jacket of the cylinder head 21b is directed into the second conduit 72. In other words, the second conduit 72 is linked to the cylinder head 21b. The second conduit 72 is linked to the reducing agent injection device cooling circuit 73 and to the bypass circuit 74 at a branch point P. In other words, the reducing agent injection device cooling circuit 73 and the bypass circuit 73 are communicated with the engine cooling circuit 21c.

The cooling water that flows into the reducing agent injection device cooling circuit 73 from the second conduit 72 is supplied to the reducing agent injection device 54. Due to this, the reducing agent injection device 54 is cooled. Accordingly, it becomes possible to keep the internal temperature of the reducing agent injection device 54 within an appropriate temperature range.

The bypass circuit 74 is arranged in parallel with the reducing agent injection device cooling circuit 73. The bypass circuit 74 includes a throttle 91. This throttle 91 adjusts the flow rate of the cooling water flowing to the reducing agent injection device cooling circuit 73 and the flow rate of the cooling water flowing to the bypass circuit 74. The flow rate of the cooling water to the reducing agent injection cooling device cooling circuit 73 is adjusted according to the diameter of the throttle 91.

The reducing agent injection device cooling circuit 73 and the bypass circuit 74 are linked to the third conduit 75 at a branch point Q. Thus, the cooling water that flows out from the reducing agent injection device cooling circuit 73 and the cooling water that flows out from the bypass circuit 74 are both conducted to the third conduit 75. And, at a branch point R, the third conduit 75 is linked to the heating circuit 76 and to the reducing agent tank antifreezing circuit 77. In other words, the heating circuit 76 and the reducing agent tank antifreezing circuit 77 are communicated with the engine cooling circuit 21c.

The heating circuit 76 and the reducing agent tank antifreezing circuit 77 are arranged in parallel. And the reducing agent injection device cooling circuit 73 is arranged in series with the parallel combination of the heating circuit 76 and the reducing agent tank antifreezing circuit 77e. The reducing agent injection device cooling circuit 73 is arranged nearer to the engine cooling circuit 21c than the parallel combination of the heating circuit 76 and the reducing agent tank antifreezing circuit 77. In other words, as viewed from the direction in which the cooling water flows, the reducing agent injection device cooling circuit 73 is positioned more upstream than the parallel combination of the heating circuit 76 and the reducing agent tank antifreezing circuit 77, and more downstream than the engine cooling circuit 21c.

The cooling water flowing in the third conduit 75 is warmed up by the engine 21 and by the reducing agent injection device 54. Thus, this cooling water flowing in the third conduit 75 functions as a heat exchange medium for supplying heat to the heating circuit 76 and to the reducing agent tank antifreezing circuit 77.

The heat exchange medium flowing in the heating circuit 76 is conducted to the heating device 80 in the interior of the operator compartment. This heating device comprises a heater core 82 and a fan 84. The heater core 82 performs heat exchange between the heat exchange medium flowing in the heating circuit 76 and air. And the fan 84 blows air that has been warmed by the heater core 82 into the operator compartment 6. The heat exchange medium that passes through the heater core 82 then flows to the branch point S.

The heat exchange medium that flows in the reducing agent tank antifreezing circuit 77 is conducted to a heat exchanger 65 that is provided in the interior of the reducing agent tank 17. This heat exchanger 65 performs heat exchange between the heat exchange medium flowing in the reducing agent tank antifreezing circuit 77 and the reducing agent. The reducing agent tank antifreezing circuit 77 includes a throttle 92 that is provided in the vicinity of the inlet of the reducing agent tank 17. This throttle 92 adjusts the flow rate of the heat exchange medium flowing to the heating device 80 and the flow rate of the heat exchange medium that flows to the heat exchanger 65. In other words, the diameter of the throttle 92 is set so that appropriate amounts of the heat exchange medium flow to the heating device 80 and to the heat exchanger 65. The heat exchange medium that passes through the heat exchanger 65 then flows to the branch point S.

At the branch point S, the return conduit 78 is connected to the heating circuit 76 and to the reducing agent tank antifreezing circuit 77. Thus, the heat exchange medium that flows out from the heating circuit 76 and the heat exchange medium that flows out from the reducing agent tank antifreezing circuit 77 are conducted to the return conduit 78. The heat exchange medium that passes down the return conduit 78 is conducted to the first conduit 71 via a branch point T.

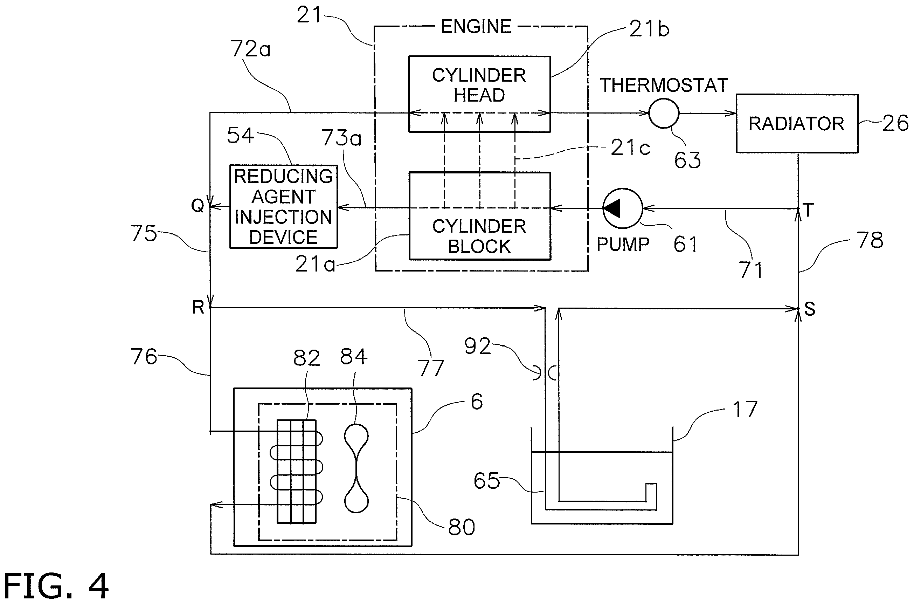

Fig. 4 is a functional diagram schematically showing a heat exchange medium flow path in a work vehicle according to a second implementation example. The heat exchange medium flow path in this second implementation example has almost the same structure as the heat exchange medium flow path in the first implementation example. Accordingly, in Fig. 4, the same reference symbols are appended to structures that are the same as ones shown in Fig. 3, and explanation of those structures will be omitted. In the following, the heat exchange medium flow path in this work vehicle according to the second implementation example will be explained, with attention being particularly focused upon the points of difference from the flow path in the first implementation example.

A second conduit 72a that is connected to the cylinder head 21b is not connected to the second reducing agent injection device 54, but extends up to the second branch point Q. It is acceptable for this second conduit 72a not to include any throttle. And the reducing agent injection device cooling circuit 73a is connected to the engine cooling circuit 21c at the cylinder block 21a of the engine 21.

A portion of the cooling water that flows into the water jacket of the cylinder block 21a proceeds into the reducing agent injection device cooling circuit 73a. This cooling water that flows into the reducing agent injection device cooling circuit 73a of the cylinder block 21a is supplied to the reducing agent injection device 54. The internal diameter of the conduit of the reducing agent injection device cooling circuit 73a may be set so that an appropriate amount of cooling water is supplied to the reducing agent injection device 54. The reducing agent injection device cooling circuit 73a and the second conduit 72a are linked to the third conduit 75 at the branch point Q.

It should be understood that, in this second implementation example as well, the reducing agent injection device cooling circuit 73a is arranged in series with the parallel combination of the heating circuit 76 and the reducing agent tank antifreezing circuit 77. And the reducing agent injection device cooling circuit 73a is arranged nearer to the engine cooling circuit 21c than the parallel combination of the heating circuit 76 and the reducing agent tank antifreezing circuit 77.

Next, the beneficial operational effects of these embodiments will be explained. With the work vehicle 1 of this embodiment, as shown in Figs. 3 and 4, one of the reducing agent injection device cooling circuit 73 or 73a, the reducing agent tank antifreezing circuit 77, and the heating circuit 76 is arranged in series with the parallel combination of the other two circuits. Accordingly the required amount of heat exchange medium that is required is reduced, as compared with the case in which the reducing agent injection device cooling circuit 73 or 73a, the reducing agent tank antifreezing circuit 77, and the heating circuit 76 are all arranged in parallel. Therefore it is possible to ensure sufficient heating performance for the heating circuit 76, to ensure sufficient cooling performance for the reducing agent injection device cooling circuit 73 or 73a, and to ensure sufficient antifreezing performance for the reducing agent tank antifreezing circuit 77.

Moreover, as shown in Figs. 3 and 4, the reducing agent tank antifreezing circuit 77 and the heating circuit 76 are arranged in parallel. Furthermore, the reducing agent injection device cooling circuit 73 or 73a is arranged in series with the parallel combination of the heating circuit 76 and the reducing agent tank antifreezing circuit 77. The reducing agent tank antifreezing circuit 77 and the heating circuit 76 abstract heat from the heat exchange medium (i.e. the cooling water), while the reducing agent injection device cooling circuit 73 or 73a supplies heat to the heat exchange medium. Accordingly, it becomes possible to implement a heat exchange medium flow path achieving good thermal efficiency.

Furthermore, the reducing agent injection device cooling circuit 73 or 73a is arranged nearer to the engine cooling circuit 21c than the parallel combination of the reducing agent tank antifreezing circuit 77 and the heating circuit 76. As a result, the heat exchange medium (i.e. the cooling water) that has been heated up by the engine cooling circuit 21c and the reducing agent injection device cooling circuit 73 or 73a is supplied to the reducing agent tank antifreezing circuit 77 and to the heating circuit 76. Accordingly, the heating performance for the operator compartment 6 and the antifreezing performance for the reducing agent tank 17 are enhanced.

And the reducing agent tank antifreezing circuit 77 includes the throttle 92 which is provided in the vicinity of the reducing agent tank 17. Moreover, the diameter of the throttle 92 is set so that appropriate amounts of the heat exchange medium are supplied to the heating device 80 and to the heat exchanger 65. Due to this, while still ensuring good heating performance for the heating device 80, it becomes possible to set the temperature of the reducing agent within an appropriate temperature range, so that it is possible to prevent freezing of the reducing agent.

As shown in Fig. 3, in the first implementation example, the bypass circuit 74 is provided as arranged in parallel with the reducing agent injection device cooling circuit 73. Due to this, the flow of a large quantity of cooling water into the reducing agent injection device cooling circuit 73 and consequent over-cooling of the reducing agent injection device 54 is prevented.

As shown in Fig. 3, in the first implementation example, the bypass circuit 74 includes the throttle 91. The flow rate of cooling water in the reducing agent injection device cooling circuit 73 is adjusted according to the diameter of the throttle 91. Accordingly, it becomes possible to keep the temperature of the reducing agent in the reducing agent injection device 54 within an appropriate temperature range.

As shown in Fig. 4, in the second implementation example, the reducing agent injection device cooling circuit 73a is linked to the engine cooling circuit 21c in the cylinder block 21a of the engine 21. Due to this, cooling water to which a great deal of heat has not been applied by the engine cooling circuit 21c is supplied to the reducing agent injection device cooling circuit 73a. Accordingly, the cooling performance of the reducing agent injection device 54 is enhanced.

Although the present invention has been explained in terms of embodiments thereof, the present invention should not be considered as being limited by the above described embodiments; various changes could be implemented within the scope of the present invention.

While, in the embodiments described above, examples are shown in which the work vehicle 1 is a wheel loader, the work vehicle could also be some other type of work vehicle, such as a hydraulic shovel or a bulldozer or the like.

In the embodiments described above, examples are shown in which the first exhaust treatment device 23 is a DOC, while the second exhaust treatment device 24 is an SCR. However, instead of a DOC, it would also be possible for a diesel minute particle collection filter (DPF) device to be employed as the first exhaust treatment device 23.

In the embodiments described above, examples are shown in which the reducing agent injection device cooling circuit 73 or 73a is arranged in series with the parallel combination of the reducing agent tank antifreezing circuit 77 and the heating circuit 76. However, it would be acceptable for any two of the reducing agent injection device cooling circuit 73 or 73a, the reducing agent tank antifreezing circuit 77, and the heating circuit 76 to be arranged in parallel, and for the remaining one circuit to be arranged in series with this parallel combination.

In the embodiments described above, examples are shown in which the reducing agent injection device cooling circuit 73 or 73a is arranged nearer to the engine cooling circuit 21c than the parallel combination of the reducing agent tank antifreezing circuit 77 and the heating circuit 76. However, it would also be acceptable for the parallel combination of the reducing agent tank antifreezing circuit 77 and the heating circuit 76 to be arranged nearer to the engine cooling circuit 21c than the reducing agent injection device cooling circuit 73 or 73a.

In the second implementation example described above, it would also be acceptable to provide a throttle in the second conduit 72a, so that this throttle sets an appropriate amount of cooling water to be supplied to the reducing agent injection device 54.

Furthermore, the arrangement of the radiator 26, the pump 61, and the thermostat 63 is not to be considered as being limited to the arrangement shown in Figs. 3 and 4; it would also be acceptable to arrange them upon some other flow path.

### POSSIBILITY OF INDUSTRIAL APPLICATION

A work vehicle can be provided that can ensure the heating performance of a heating circuit, the cooling performance of a reducing agent injection device cooling circuit, and the antifreezing performance of a reducing agent tank antifreezing circuit.

## Claims

1. A work vehicle (1), comprising:
an engine (21);
an exhaust treatment device (24) configured to treat the exhaust of the engine;
a reducing agent injection device (54) configured to inject a reducing agent into the exhaust treatment device;
a reducing agent tank (17) for storing the reducing agent;
an operator compartment (6);
an engine cooling circuit (21c);
a reducing agent injection device cooling circuit (73, 73a); and
a reducing agent tank antifreezing circuit (77);
**characterized by**
a heating circuit (76) for the operator compartment;
wherein:
the reducing agent injection device cooling circuit (73, 73a), the reducing agent tank antifreezing circuit (77), and the heating circuit (76) are arranged so as to communicate with the engine cooling circuit (21c); and
one of the reducing agent injection device cooling circuit (73, 73a), the reducing agent tank antifreezing circuit (77), and the heating circuit (76) is arranged in series with the other circuits.

2. The work vehicle (1) according to Claim 1, wherein:
the reducing agent tank antifreezing circuit (77) is arranged in parallel with the heating circuit (76); and
the reducing agent injection device cooling circuit (73, 73a) is arranged in series with a parallel combination of the reducing agent tank antifreezing circuit (77) and the heating circuit (76).

3. The work vehicle (1) according to Claim 2, wherein the reducing agent tank antifreezing circuit (77) includes a throttle (92) provided in the vicinity of the reducing agent tank.

4. The work vehicle (1) according to Claim 2 or Claim 3, further comprising a bypass circuit (74) arranged in parallel with the reducing agent injection device cooling circuit (73).

5. The work vehicle (1) according to Claim 4, wherein the bypass circuit (74) includes a throttle (91).

6. The work vehicle (1) according to any one of Claims 2 through 5, wherein the reducing agent injection device cooling circuit (73, 73a) is arranged nearer to the engine cooling circuit (21c) than the parallel combination of the reducing agent tank antifreezing circuit (77) and the heating circuit (76).

7. The work vehicle (1) according to Claim 6, wherein the reducing agent injection device cooling circuit (73a) is linked to the engine cooling circuit (21c) at the cylinder block (21a) of the engine.

## Patentansprüche

1. Arbeitsfahrzeug (1), mit:
einem Motor (21);
einer Abgasbehandlungsvorrichtung (24), die konfiguriert ist, das Abgas des Motors zu behandeln;
einer Reduktionsmitteleinspritzvorrichtung (54), die konfiguriert ist, ein Reduktionsmittel in die Abgasbehandlungsvorrichtung einzuspritzen;
einem Reduktionsmitteltank (17) zum Lagern des Reduktionsmittels;
einem Führerhaus (6);
einem Motorkühlkreislauf (21c);
einen Kühlkreislauf (73, 73a) der Reduktionsmitteleinspritzvorrichtung; und
einem Reduktionsmitteltank-Frostschutzkreislauf (77);
**gekennzeichnet durch**
einen Heizkreislauf (76) für das Führerhaus;
wobei:
der Kühlkreislauf (73, 73a) der Reduktionsmitteleinspritzvorrichtung, der Reduktionsmitteltank-Frostschutzkreislauf (77) und der Heizkreislauf (76) so angeordnet sind, dass sie mit dem Motorkühlkreislauf (21c) in Verbindung stehen; und
einer des Kühlkreislaufs (73, 73a) der Reduktionsmitteleinspritzvorrichtung, des Reduktionsmitteltank-Frostschutzkreislaufs (77) und des Heizkreislaufs (76) in Reihe mit den anderen Kreisläufen angeordnet sind.

2. Arbeitsfahrzeug (1) nach Anspruch 1, wobei:
der Reduktionsmitteltank-Frostschutzkreislauf (77) parallel mit dem Heizkreislauf (76) angeordnet ist; und
der Kühlkreislauf (73, 73a) der Reduktionsmitteleinspritzvorrichtung in Reihe mit einer parallelen Kombination des Reduktionsmitteltank-Frostschutzkreislaufs (77) und des Heizkreislaufs (76) angeordnet ist.

3. Arbeitsfahrzeug (1) nach Anspruch 2, wobei der Reduktionsmitteltank-Frostschutzkreislauf (77) ein Drosselventil (92) aufweist, das in der Nähe des Reduktionsmitteltanks vorgesehen ist.

4. Arbeitsfahrzeug (1) nach Anspruch 2 oder 3, das ferner einen Umgehungskreislauf (74) aufweist, der parallel mit dem Kühlkreislauf (73) der Reduktionsmitteleinspritzvorrichtung angeordnet ist.

5. Arbeitsfahrzeug (1) nach Anspruch 4, wobei der Umgehungskreislauf (74) ein Drosselventil (91) aufweist.

6. Arbeitsfahrzeug (1) nach einem der Ansprüche 2 bis 5, wobei der Kühlkreislauf (73, 73a) der Reduktionsmitteleinspritzvorrichtung näher zum Motorkühlkreislauf (21c) als die parallele Kombination des Reduktionsmitteltank-Frostschutzkreislaufs (77) und des Heizkreislaufs (76) angeordnet ist.

7. Arbeitsfahrzeug (1) nach Anspruch 6, wobei der Kühlkreislauf (73a) der Reduktionsmitteleinspritzvorrichtung mit dem Motorkühlkreislauf (21c) am Zylinderblock (21a) des Motors verbunden ist.

## Revendications

1. Engin de chantier (1), comprenant :
un moteur (21) ;
un dispositif de traitement des gaz d'échappement (24) prévu pour traiter les gaz d'échappement du moteur ;
un dispositif d'injection d'agent réducteur (54) prévu pour injecter un agent réducteur dans le dispositif de traitement des gaz d'échappement ;
un réservoir d'agent réducteur (17) destiné à stocker l'agent réducteur ;
une cabine de conducteur (6) ;
un circuit de refroidissement de moteur (21c) ;
un circuit de refroidissement du dispositif d'injection d'agent réducteur (73, 73a) ; et
un circuit antigel du réservoir d'agent réducteur (77) ;
**caractérisé par**
un circuit de chauffage (76) pour la cabine de conducteur ; où :
le circuit de refroidissement du dispositif d'injection d'agent réducteur (73, 73a), le circuit antigel du réservoir d'agent réducteur (77), et le circuit de chauffage (76) sont disposés de manière à communiquer avec le circuit de refroidissement de moteur (21c) ; et
le circuit de refroidissement du dispositif d'injection d'agent réducteur (73, 73a) ou le circuit antigel du réservoir d'agent réducteur (77) ou le circuit de chauffage (76) est monté en série avec les autres circuits.

2. Engin de chantier (1) selon la revendication 1, où :
le circuit antigel du réservoir d'agent réducteur (77) est monté en parallèle avec le circuit de chauffage (76) ; et
le circuit de refroidissement du dispositif d'injection d'agent réducteur (73, 73a) est monté en série avec une combinaison parallèle du circuit antigel du réservoir d'agent réducteur (77) et du circuit de chauffage (76).

3. Engin de chantier (1) selon la revendication 2, où le circuit antigel du réservoir d'agent réducteur (77) comporte un étranglement (92) prévu à proximité du réservoir d'agent réducteur.

4. Engin de chantier (1) selon la revendication 2 ou la revendication 3, comprenant en outre un circuit de dérivation(74) monté en parallèle avec le circuit de refroidissement du dispositif d'injection d'agent réducteur (73) .

5. Engin de chantier (1) selon la revendication 4, où le circuit de dérivation(74) comporte un étranglement (91).

6. Engin de chantier (1) selon l'une des revendications 2 à 5, où le circuit de refroidissement du dispositif d'injection d'agent réducteur (73, 73a) est plus proche du circuit de refroidissement de moteur (21c) que la combinaison parallèle du circuit antigel du réservoir d'agent réducteur (77) et du circuit de chauffage (76).

7. Engin de chantier (1) selon la revendication 6, où le circuit de refroidissement du dispositif d'injection d'agent réducteur (73a) est relié au circuit de refroidissement de moteur (21c) par le bloc-cylindres (21a) du moteur.
